# EUROPÄISCHE PATENTSCHRIFT

(11) **EP 0 402 834 B1**
(45) Veröffentlichungstag und Bekanntmachung des Hinweises auf die Patenterteilung: **20.04.1994**
(21) Anmeldenummer: 90111012.2
(22) Anmeldetag: 11.06.1990
(51) Int. Cl.: H02J 9/06, H02J 1/10, G06F 1/30

(54) **Schaltung zum Überwachen der Spannung einer ausgewählten Gleichstromversorgungseinrichtung in einem redundanten Stromversorgungssystem**
Circuit for monitoring the voltage of a selected DC power supply in a redundant power supply system
Circuit de surveillance de la tension d'un dispositif sélectionné d'alimentation à courant continu dans un système d'alimentation redondant

(30) Priorität: 16.06.1989 DE 3919772
(43) Veröffentlichungstag der Anmeldung: 19.12.1990
(73) Patentinhaber: SIEMENS AKTIENGESELLSCHAFT, 80333 München (DE)
(72) Erfinder: Maeder, Rolf, D-3151 Vöhrum (DE)

(56) Entgegenhaltungen:
- WO-A-87/04874
- CH-A- 452 025
- DE-A- 3 444 065
- FR-A- 2 337 457

## Beschreibung

Die Erfindung geht aus von einer Schaltung nach dem Oberbegriff des Patentanspruches 1.

Aus der DE-OS 26 42 464 ist ein redundantes Stromversorgungssystem mit zwei Gleichstromversorgungseinrichtungen bekannt, von denen entweder die eine oder die andere die Stromversorgung nachgeschalteter Verbraucher übernimmt. Die Verbraucher sind über gesonderte Versorgungsleitungen an beide Stromversorgungs einrichtungen angeschlossen; die Stromversorgungseinrichtungen sind ausgangsseitig durch in die Verbraucherkreise einbezogene gegenpolig geschaltete Dioden gegeneinander entkoppelt. Beide Stromversorgungseinrichtungen werden durch zugehörige Spannungswächter auf das Einhalten vorgegebener Spannungsgrenzwerte überwacht. Der der jeweils einspeisenden Stromversorgungseinrichtung zugeordnete Spannungswächter dient dazu, die zugehörige Stromversorgungseinrichtung beim Auftreten einer Störung abzuschalten und die jeweils andere Stromversorgungseinrichtung auf die Verbraucher aufzuschalten; der der jeweiligen Reserve-Stromversorgungseinrichtung zugeordnete Spannungswächter dient dazu, etwaige Störungen in der Reserve-Stromversorgungseinrichtung und in den angeschlossenen Leitungen so rechtzeitig zu erkennen, daß die Störungsbeseitigung vorgenommen werden kann, bevor eine Störung im Netz der einspeisenden Stromversorgungseinrichtung auftritt. Die beiden Spannungswächter arbeiten nur solange ihren Aufgaben entsprechend, solange die beiden Versorgungsnetze für die Verbraucher tatsächlich entkoppelt sind. Beim Durchlegieren einer der Entkopplungsdioden tritt eine Vermaschung der beiden Netze ein, so daß die Aussagen der beiden Spannungswächter nicht mehr eindeutig auf die zu überwachenden Netze bezogen sind. Bei dynamischen Spannungsabsenkungen wie sie z. B. bei Kurzschlüssen oder Leitungsunterbrechungen auftreten, vergeht eine endliche, durch die Eigenkapazität des Spannungswächter bedingte Zeitspanne für das Erkennen der Störung und das Umschalten auf die Ersatzversorgung. In dieser Zeit sinkt die Spannung der noch speisenden Stromversorgungseinrichtung noch weiter ab, wobei es bei den angeschlossenen Verbrauchern zu Fehlreaktionen kommen kann. Dies ist insbesondere dann gegeben, wenn zu den Verbrauchern auch Rechner oder sonstige elektronische Einrichtungen gehören, die beim Unterschreiten einer gerade noch zulässigen Versorgungsspannung unkontrolliert reagieren und damit die Sicherheit der Anlage außer Kraft setzen. Das bekannte Stromversorgungssystem arbeitet im Störungsfall nicht unterbrechungsfrei.

Aus der DE-AS 17 65 270 ist ein Verfahren zum unterbrechungsfreien Umschalten eines Verbrauchers von einem Stromversorgungsaggregat auf ein Bereitschaftsnetz oder Ersatzaggregat bekannt, bei dem zum Umschalten der Stromversorgung von dem einen auf das andere Aggregat Ausschlußkontakt von Schaltschützen verwendet sind. Im Falle von Störungen, die zum Umschalten der Stromversorgungseinrichtungen führen, übernimmt ein Energiespeicher die vorübergehende Speisung der Verbraucher. Hierdurch soll eine unterbrechungsfreie Stromversorgung der Verbraucher auch für den Zeitraum gewährleistet sein, die eine Überwachungseinrichtung zum Erkennen der Störung und zum Umschalten der Versorgungseinrichtungen benötigt. Der Energiespeicher ist dort als Kondensator ausgebildet. Dies bedeutet, daß im Störungsfall nur relativ leistungsschwache Verbraucrier gepuffert werden können. Für leistungsstarke Verbraucher ist eine unterbrechungsfreie Stromversorgung nicht gewährleistet.

Aufgabe der Erfindung ist es, eine Schaltung nach dem Oberbegriff des Patentanspruches 1 anzugeben, die einerseits außerordentlich rasch auf Spannungsabsenkungen im einspeisenden Netz reagiert und andererseits eine quasi unterbrechungsfreie Stromversorgung auch lei stungsstarker Verbraucher beim Umschalten auf ein Ersatzaggregat gewährleistet.

Die Erfindung löst diese Aufgabe durch die kennzeichnenden Merkmale des Patentanspruches 1. Vorteilhafte Ausgestaltungen der erfindungsgemaßen Schaltung sind in den Unteransprüchen angegeben.

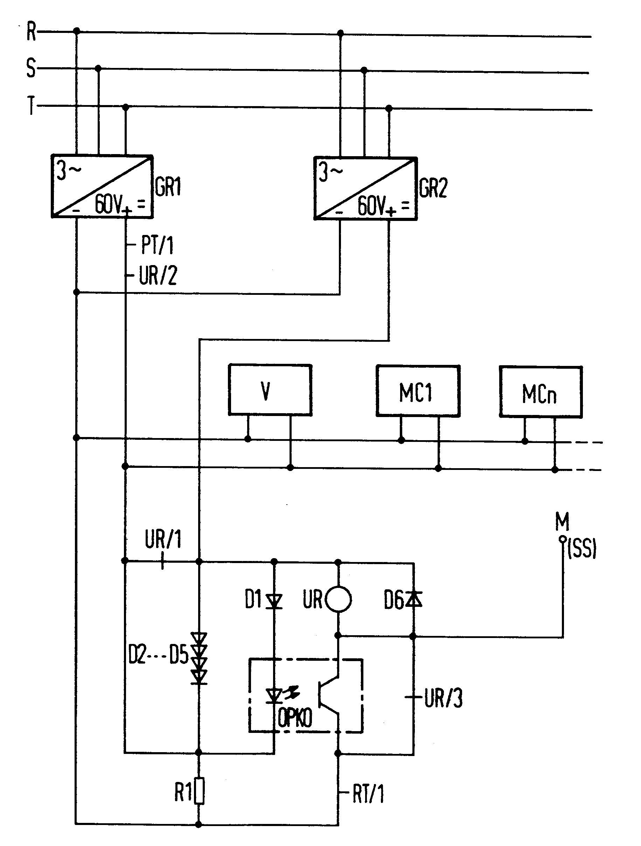

Die Erfindung ist nachstehend anhand eines in der Zeichnung dargestellten Ausführungsbeispieles näher erläutert.

Die Zeichnung zeigt im oberen Teil ein dreiphasiges Netz R, S, T zum Speisen zweier Gleichstromversorgungseinrichtungen GR1 und GR2. Von diesen Gleichstromversorgungseinrichtungen dient die Gleichstromversorgungseinrichtung GR1 zum Speisen von Verbrauchern, zu denen neben leistungsstarken Verbrauchern V auch leistungsschwache oder besonders spannungsempfindliche Verbraucher wie die Rechner MC1 bis MCn eines Rechnersystems zählen.

Die Gleichstromversorgungseinrichtung GR2 dient als Ersatzaggregat, auf das bei einem Defekt der einspeisenden Gleichstromversorgungseinrichtung GR1 zurückgegriffen werden soll. Die beiden Gleichstromversorgungseinrichtungen sind ausgangsseitig über die Kontakte UR/1 und UR/2 eines Umschaltrelais entkoppelt.

Im unteren Teil der Zeichnung ist die erfindungsgemäße Schaltung zum Überwachen der Spannung und zum Umschalten der Stromversorgungseinrichtungen im Störungsfall angegeben. Diese Schaltung besteht im wesentlichen aus einem als Optokoppler ausgebildeten schnellen elektronischen Schalter OPKO, der sowohl bei plötzlichen als auch bei langsamen Spannungsabsenkungen im Verbrauchernetz anspricht, eine Störungsmeldung SS auslöst und ein Umschaltrelais UR zum Umschalten der Stromversorgungseinrichtungen ansteuert. Gespeist wird der elektronische Schalter über mehrere in Reihe geschaltete Dioden D2 bis D5. Die Anode dieser Dioden-Reihenschaltung ist an den Pluspol der Reserve-Stromversorgungseinrichtung GR2 und die Kathode an den Pluspol der einspeisenden Stromversorgungseinrichtung GR1 angeschlossen. Die Minuspole der beiden Stromversorgungseinrichtungen sind untereinander verbunden und an einen Widerstand R1 geführt, dessen anderer Anschluß an die Kathode der Dioden-Reihenschaltung angeschlossen ist. Die von den beiden Stromversorgungseinrichtungen GR1 und GR2 ausgangsseitig abgegebenen Potentiale liegen an der Anode und der Kathode der Dioden-Reihenschaltung an. Solange diese Potentiale gleichgroß sind, ist der Spannungsabfall an der DiodenReihenschaltung gleich null und der elektronische Schalter OPKO befindet sind in seiner Ausgangsstellung, in der sein Schalttransistor hochohmig geschaltet ist. Unterschreitet die Ausgangsspannung des einspeisenden Stromversorgungsgerätes GR1 die Ausgangsspannung des Reserve-Stromversorgungsgerätes GR2 um einen Betrag, der mindestens gleich der Durchlaßspannung der DiodenReihenschaltung D2 bis D5 ist, so entsteht an dieser Dioden-Reihenschaltung ein Spannungsabfall, der gerade groß genug sein soll, um den elektronischen Schalter OPKO durchzusteuern. Als Folge hiervon verschwindet das bislang am Meldeausgang M des Umschaltrelais UR anliegende positive Potential und wird durch das über den Schalttransistor des elektronischen Schalters anliegende negative Potential ersetzt; dieses negative Potential stellt die anzuzeigende Störungsmeldung SS dar. Die Leuchtdiode des als elektronischer Schalter verwendeten Optokopplers reagiert auf das Unterschreiten des vorgegebenen Spannungswertes im µs-Bereich; die Störungsmeldung wird innerhalb weniger Millisekunden ausgegeben. Als Bewertungseinrichtung des am Meldeausgang M abgreifbaren Potentials dient in vorteilhafter Weise das von den Stromversorgungseinrichtungen gespeiste Rechnersystem. Das Rechnersystem kann sich beim Erkennen einer Störungsmeldung selbsttätig abschalten oder abgeschaltet werden.

Mit dem Einstellen des elektronischen Schalters erfolgt die Anschaltung des mit dessen Schalttransistor in Reihe liegenden Umschaltrelais UR. Dieses Umschaltrelais veranlaßt mit seinen Kontakten UR/1 und UR/2 das Atischalten der als gestört erkannten Stromversorgungseinrichtung GR1 und das Aufschalten der bisherigen Reserve-Stromversorgungseinrichtung GR2 auf den Verbraucherstromkreis. Außerdem betätigt das Umschaltrelais seinen Kontakt UR/3 und schaltet sich dabei einen Haltestromkreis, der es unabhängig macht vom Betriebszustand des elektronischen Schalters. Über den Selbsthaltekontakt UR/3 wird zusätzlich Minuspotential an den Meldeausgang M der Überwachungsschaltung gelegt, so daß die einmal ausgelöste Störungsmeldung dort auch dann bestehen bleibt, wenn der elektronische Schalter wieder in die Grundstellung gelangt. Dies geschieht beim Aufschalten der Stromversorgungseinrichtung GR2 über den Kontakt UR/1 des Umschaltrelais, der die Dioden-Reihenschaltung kurzschließt.

Da sich an der Dioden-Reihenschaltung keine höhere Spannung aufbauen kann als die Summe der Durchlaßspannungen der Einzeldioden, ist sichergestellt, daß am Eingang des elektronischen Schalters keine Überspannungen auftreten können. Eine in Durchlaßrichtung der Leuchtdiode des Optokopplers betriebene Diode D1 schützt den Optokoppler vor Gegenspannung. Eine der Wicklung des, Umschaltrelais UR parallelgeschaltete Diode D6 schützt den Optokoppler zusätzlich vor Abschaltinduktionsspitzen des Umschaltrelais.

In den Stromkreis der speisenden Stromversorgungseinrichtung GR1 ist der Kontakt PT/1 eine Prüftaste geschaltet, über die die erfindungsgemäße Schaltung sporadisch von Hand oder automatisch, z. B. zu vorgegebenen Zeiten, auf ordnungsgerechtes Funktionsverhalten überprüfbar ist. Durch Auftrennen der Zuleitung zum Pluspol der Stromversorgungseinrichtung GR1 wird die bislang bestehende Potentialgleichheit an den Anschlüssen der Dioden-Reihenschaltung aufgehoben und der elektronische Schalter zum Auslösen der Störungsmeldung und zum Einstellen des Umschaltrelais angeschaltet. Sollte auch nur eine Diode der Dioden-Reihenschaltung D2 bis D5 durchlegiert sein, so würde bei einem derartigen Prüfdurchlauf aufgrund des verminderten Spannungsabfalles an der Dioden-Reihenschaltung die dort abgreifbare Spannung nicht mehr zum Durchsteuern des elektronischen Schalters ausreichen und die erwartete Störungsmeldung würde ausbleiben. Durch die Reihenschaltung mehrerer Dioden ist auch in diesem Fall noch eine ausreichend sichere Entkopplung der beiden Stromversorgungseinrichtungen GR1 und GR2 gewährleistet.

Zum hochgenauen Einstellen der Schaltschwelle des Optokoppler-Schalttransistors kann es von Vorteil sein, die Basisvorspannung des Schalttransistors einzustellen. Hierfür müssen dann entsprechend beschaltete Optokoppler verwendet werden.

Zum Zurückstellen der erfindungsgemäßen Schaltung in die Ausgangsstellung bespielsweise nach einer Funktionsprüfung dient ein mit dem Schalttransistor des elektronsichen Schalters und dem Umschaltrelais UR in Reihe liegender Kontakt RT/1 einer Rückstelltaste. Bei Betätigung der Rückstelltaste wird das Umschaltrelais UR abgeworfen und die Störungsmeldung am Meldeausgang M verschwindet wieder.

Zum Überwachen der Reserve-Stromversorgungseinrichtung GR2 auf unzulässige Spannungsabsenkung ist dieser Stromversorgungseinrichtung ein interner Spannungswächter zuzuordnen, der seinerseits eine Störungsmeldung auslöst wenn die Ausgangsspannung dieser Stromversorgungseinrichtung einen zulässigen unteren Grenzwert unterschreitet. Diese Maßnahme stellt sicher, daß das von der speisenden Stromversorgungseinrichtung GR1 gelieferte Potential über die Diodenreihenschaltung auch tatsächlich mit einem innerhalb der Toleranzgrenzen liegende Potential verglichen wird. Für die Stromversorgungseinrichtung GR1 braucht ein derartiger interner Spannungswächter nicht vorhanden sein, weil sowohl dynamische als auch statische Spannungsabsenkungen gegenüber der Vergleichsspannung im Lastkreis dieser Stromversorgungseinrichtung über die erfindungsgemäße Überwachungsschaltung erkannt werden.

## Patentansprüche

1. Schaltung zum Überwachen der Spannung einer ausgewählten Gleichstromversorgungseinrichtung in einem aus mehreren derartigen, ausgangsseitig gegeneinander entkoppelten Stromversorgungseinrichtungen (GR1, GR2) bestehenden Stromversorgungssystem auf statisches und/oder dynamisches Unterschreiten eines vorgegebenen Spannungswertes und zum unterbrechungsfreien Umschalten der Stromversorgung von Verbrauchern (V, MC1 bis MCn) im Falle unzulässiger Spannungsabsenkung auf eine Reserve-Stromversorgungseinrichtung,
**dadurch gekennzeichnet,**
daß die beiden Stromversorgungseinrichtungen (GR1, GR2) mit ihrem auf Bezugspotential liegenden Minuspol (-) einpolig miteinander verbunden sind und daß der Pluspol (+) der Reserve-Stromversorgungseinrichtung (GR2) an die Anode einer Dioden-Reihenschaltung (D2 bis D5) angeschlossen ist, deren Kathode mit dem Pluspol (+) der ausgewählten Stromversorgungseinrichtung (GR1) und über einen Widerstand (R1) mit dem Minuspol (-) der Stromversorgungseinrichtungen verbunden ist,
daß dieser Dioden-Reihenschaltung ein elektronischer Schalter (OPKO) parallelgeschaltet ist zum Auslösen einer Störungsmeldung (SS) bei seiner Betätigung und zum Einstellen eines elektromechanischen Schalters (UR), der die Umschaltung der Stromversorgungseinrichtungen (GR1, GR2) über Ausschlußkontakte (UR/1, UR/2) bewirkt und sich einen aus der Reserve-Stromversorgungseinrichtung (GE2) gespeisten Selbsthaltekreis schaltet (über UR/3).

2. Schaltung nach Anspruch 1, **dadurch gekennzeichnet,** daß der die Reserve-Stromversorgungseinrichtung (GR2) im Störungsfall aufschaltende Kontakt (UR/1) des elektromechanischen Schalters (UR) eine Verbindung schaltet zwischen der Anode der Dioden-Reihenschaltung (D2 bis D5) und der von der Kathode der Dioden-Reihenschaltung zum Pluspol (+) der ausgewählten Stromversorgungseinrichtung (GR1) führenden Zuleitung.

3. Schaltung nach Anspruch 1, **dadurch gekennzeichnet,** daß der Selbsthaltekontakt (UR/3) des elektromechanischen Schalters (UR) der Schaltstrecke des elektronischen Schalters (OPKO) parallelgeschaltet ist.

4. Schaltung nach Anspruch 1, **dadurch gekennzeichnet,** daß der elektronische Schalter (OPKO) als Optokoppler ausgebildet ist, dessen Leuchtdiode in gleicher Richtung gepolt ist wie die Dioden-Reihenschaltung (D2 bis D5) und dessen Schalttransistor mit dem elektromechanischen Schalter (UR) in Reihe geschaltet ist.

5. Schaltung nach Anspruch 4, **dadurch gekennzeichnet,** daß die Schaltschwelle des Optokoppler-Schalttransistors durch Basisvorspannung einstellbar ist.

6. Schaltung nach Anspruch 4, **dadurch gekennzeichnet,** daß im Stromkreis der Leuchtdiode des Optokopplers (OPKO) eine in deren Durchlaßrichtung betriebene Diode (D1) angeordnet ist.

7. Schaltung nach Anspruch 1 oder 1 und 6, **dadurch gekennzeichnet,** daß die Dioden-Reihenschaltung (D2 bis D5) so viele Dioden aufweist, daß die Summe von deren Durchlaßspannungen gerade ausreicht, um den elektronischen Schalter (OPKO) zu betätigen.

8. Schaltung nach Anspruch 1, **dadurch gekennzeichnet,** daß der Wicklung des elektromechanischen Schalters (UR) eine Löschdiode (D6) oder ein Löschkondensator parallelgeschaltet ist.

9. Schaltung nach Anspruch 1, **dadurch gekennzeichnet,** daß in den Haltekreis des elektromechanischen Schalters (UR) ein bei seiner Betätigung den Haltestromkreis auftrennender Rückstellkontakt (RT/1) einer Rückstelltaste geschaltet ist.

10. Schaltung nach Anspruch 1, **dadurch gekennzeichnet,** daß in den Lastkreis der ausgewählten Stromversorgungseinrichtung (GR1) ein bei seiner Betätigung den Lastkreis auftrennender Kontakt (PT/1) einer Prüftaste geschaltet ist.

11. Schaltung nach Anspruch 1, **dadurch gekennzeichnet,** daß in den Lastkreis der ausgewählten Stromversorgungseinrichtung (GR1) ein bei seiner Betätigung den Lastkreis öffnender Kontakt eines automatisch betätigbaren Schalters geschaltet ist.

12. Schaltung nach Anspruch 1, **dadurch gekennzeichnet,** daß die Reserve-Stromversorgungseinrichtung (GR2) einen zugehörigen Spannungswächter zum Erkennen einer unzulässigen statischen Spannungsabsenkung aufweist.

## Claims

1. Circuit for monitoring the voltage of a selected DC supply device in a power-supply system which comprises a plurality of such power-supply devices (GR1, GR2), which are decoupled from one another on the output side, for steady-state and/or transient undershooting of a predetermined voltage value and for changing over the power supply of loads (V, MC1 to MCn), without interruption, in the event of an unacceptable voltage reduction, to a spare power-supply device, characterized in that the two power-supply devices (GR1, GR2) are connected to one another in a single-pole manner by means of their negative terminal (-) which is at reference potential, and in that the positive terminal (+) of the spare power-supply device (GR2) is connected to the anode of a diode series circuit (D2 to D5) whose cathode is connected to the positive terminal (+) of the selected power-supply device (GR1) and, via a resistor (R1), to the negative terminal (-) of the power-supply devices, in that this diode series circuit has an electronic switch (OPKO) connected in parallel with it in order to trigger a fault report (SS) when it is operated and in order to set an electromechanical switch (UR) which causes the power-supply devices (GR1, GR2) to change over via disconnection contacts (UR/1, UR/2), and a self-latching circuit, which is supplied from the spare power-supply device (GE2), is switched (via UR/3).

2. Circuit according to Claim 1, characterized in that that contact (UR/1) of the electromechanical switch (UR) which connects the spare power-supply device (GR2) in the event of a fault switches a connection between the anode of the diode series circuit (D2 to D5) and the supply line which leads from the cathode of the diode series circuit to the positive terminal (+) of the selected power-supply device (GR1).

3. Circuit according to Claim 1, characterized in that the self-latching contact (UR/3) of the electromechanical switch (UR) is connected in parallel with the switching path of the electronic switch (OPKO).

4. Circuit according to Claim 1, characterized in that the electronic switch (OPKO) is constructed as an optocoupler whose light-emitting diode is polarized in the same direction as the diode series circuit (D2 to D5) and whose switching transistor is connected in series with the electromechanical switch (UR).

5. Circuit according to Claim 4, characterized in that the switching threshold of the optocoupler switching transistor is adjustable by means of the base bias voltage.

6. Circuit according to Claim 4, characterized in that a diode (D1), which is operated in the forward direction of the light-emitting diode of the optocoupler (OPKO), is arranged in the circuit of said light-emitting diode of the optocoupler (OPKO).

7. Circuit according to Claim 1 or 1 and 6, characterized in that the diode series circuit (D2 to D5) has so many diodes that the sum of their forward voltages is just sufficient to operate the electronic switch (OPKO).

8. Circuit according to Claim 1, characterized in that the winding of the electromechanical switch (UR) has a turn-off diode (D6) or a turn-off capacitor connected in parallel with it.

9. Circuit according to Claim 1, characterized in that a resetting contact (RT/1), which disconnects the latching circuit when it is operated, of a resetting key is connected in the latching circuit of the electromechanical switch (UR).

10. Circuit according to Claim 1, characterized in that a contact (PT/1), which disconnects the load circuit when it is operated, of a test key is connected in the load circuit of the selected power-supply device (GR1).

11. Circuit according to Claim 1, characterized in that a contact, which opens the load circuit when it is operated, of an automatically operable switch is connected in the load circuit of the selected power-supply device (GR1).

12. Circuit according to Claim 1, characterized in that the spare power-supply device (GR2) has an associated voltage monitor for detecting an unacceptable steady-state voltage reduction.

## Revendications

1. Circuit pour le contrôle de la tension d'un dispositif sélectionné d'alimentation en courant continu, dans un système d'alimentation en courant constitué de plusieurs dispositifs d'alimentation en courant (GR1, GR2) de ce genre et découplés les uns des autres côté sortie, en ce qui concerne le sous-dépassement statique et/ou dynamique d'une valeur de tension prédéterminée, et pour la commutation sans interruption de l'alimentation en courant sur un dispositif d'alimentation de courant de réserve, par des unités de consommation (V, MC1 à MCn), dans le cas d'une déviation de tension inadmissible,
caractérisé par le fait
que les deux dispositifs d'alimentation en courant (GR1, GR2) sont reliés entre eux de manière unipolaire par leur pôle négatif (-) placé au potentiel de référence, et que le pôle positif (+) du dispositif d'alimentation en courant de réserve (GR2) est relié à l'anode d'un circuit-série à diodes (D2 à D5), dont la cathode est reliée au pôle positif (+) du dispositif sélectionné d'alimentation en courant (GR1) et, par l'intermédiaire d'une résistance (R1), au pôle négatif (-) des dispositifs d'alimentation en courant,
qu'en parallèle au circuit-série à diodes est branché un commutateur électronique (OPKO), pour détecter une signalisation de perturbation (SS) lors de sa commande et pour régler un commutateur électro-mécanique (UR), qui provoque la commutation des dispositifs d'alimentation en courant (GR1, GR2) par l'intermédiaire de contacts de débranchement (UR/1, UR/2), et qui se branche (par l'intermédiaire de UR/3) à un circuit d'arrêt automatique alimenté à partir du dispositif d'alimentation en courant de réserve (GR2).

2. Circuit suivant la revendication 1, caractérisé par le fait que le contact (UR/1) du commutateur électro-mécanique (UR), qui relie, en cas de perturbation, le dispositif d'alimentation en courant de réserve (GR2), établit une liaison entre l'anode du circuit-série à diodes (D2 à D5) et le conducteur allant de la cathode du circuit-série à diodes au pôle positif (+) du dispositif sélectionné d'alimentation en courant (GR1).

3. Circuit suivant la revendication 1, caractérisé par le fait que le contact d'arrêt automatique (UR/3) du commutateur électro-mécanique (UR) est branché en parallèle à la section de commutation du commutateur électronique (OPKO).

4. Circuit suivant la revendication 1, caractérisé par le fait que le commutateur électronique (OPKO) est formé en tant qu'optocoupleur, dont la diode électroluminescente est polarisée dans le même sens que les diodes du circuit-série (D2 à D5) et dont le transistor de commutation est branché en série avec le commutateur électromécanique (UR).

5. Circuit suivant la revendication 4, caractérisé par le fait que la valeur de seuil de commutation du transistor de commutation de l'optocoupleur est susceptible d'être réglée par la tension de polarisation de la base.

6. Circuit suivant la revendication 4, caractérisé par le fait qu'une diode (D1), branchée en direct, est montée dans le circuit de courant de la diode électroluminescente de l'optocoupleur(OPKO).

7. Circuit suivant la revendication 1 ou 1 et 6, caractérisé par le fait que le circuit-série à diodes (D2 à D5) comporte un nombre tel de diodes que la somme de leur tension directe suffit tout juste à commander le commutateur électronique (OPKO).

8. Circuit suivant la revendication 1, caractérisé par le fait qu'une diode d'amortissement (D6) ou un condensateur d'amortissement est branché en parallèle à l'enroulement du commutateur électromécanique (UR).

9. Circuit suivant la revendication 1, caractérisé par le fait qu'un contact de rappel (RT/1) d'une touche de rappel, qui se branche, lors de sa commande, au circuit de courant d'arrêt, est monté dans le circuit d'arrêt du commutateur électromécanique (UR).

10. Circuit suivant la revendication 1, caractérisé par le fait qu' un contact (PT/1) d'une touche de contrôle, qui se débranche, lors de sa commande, du circuit de charge, est monté dans le circuit de charge du dispositif sélectionné d'alimentation en courant (GR1).

11. Circuit suivant la revendication 1, caractérisé par le fait qu'un contact, ouvrant, lors de sa commande, le circuit de charge, d'un commutateur qui est susceptible d'être commandé automatiquement est branché dans le circuit de charge du dispositif d'alimentation en courant (GR1).

12. Circuit suivant la revendication 1, caractérisé par le fait que le dispositif d'alimentation en courant de réserve (GR2) comporte relais de protection associé, pour reconnaître une déviation statique inadmissible de la tension.
